# EUROPEAN PATENT SPECIFICATION

(11) **EP 1 113 192 B1**
(45) Date of publication and mention of the grant of the patent: **28.05.2003**
(21) Application number: 99830811.8
(22) Date of filing: 29.12.1999
(51) Int. Cl.: F16H 57/02, B60K 17/04

(54) **Adjustable gearbox for vehicles, able to maintain constant ground clearance**
Zwecks Beibehaltung einer konstanten Bodenfreiheit verstellbares Kraftfahrzeuggetriebe.
Bôite de vitesses pour véhicule, telle bôite de vitesses étant adaptable pour maintenir une garde au sol constante

(43) Date of publication of application: 04.07.2001
(73) Proprietor: MORINI FRANCO MOTORI S.p.A., 40033 Casalecchio di Reno (Bologna) (IT)
(72) Inventor: Lambertini, Franco, 40053 Bazzano, Bologna (IT)
(74) Representative: Lanzoni, Luciano

(56) References cited:
- EP-A- 0 091 346
- EP-A- 0 926 399
- US-A- 1 515 046
- US-A- 3 901 336
- US-A- 4 106 365
- US-A- 4 448 092
- PATENT ABSTRACTS OF JAPAN vol. 014, no. 319 (M-0996), 9 July 1990 (1990-07-09) & JP 02 106479 A (ISEKI & CO LTD), 18 April 1990 (1990-04-18)
- PATENT ABSTRACTS OF JAPAN vol. 008, no. 132 (M-303), 20 June 1984 (1984-06-20) -& JP 59 034065 A (HONDA GIKEN KOGYO KK), 24 February 1984 (1984-02-24)

## Description

The present invention relates to an adjustable gearbox for vehicles, able to maintain their ground clearance constant. More specifically, the gearbox according to the present invention is conceived to be able indifferently to use different diameters of the driving wheel or of the driving wheels, maintaining substantially constant the ground clearance of the vehicle. The present invention finds advantageous application in the field of two-wheel vehicles, such as mopeds, motorcycles, scooters, or in vehicles with three or four wheels such as lorries, quadri-cycles, etc. In particular, the present invention can be applied indifferently to vehicles equipped with any kind of engine or motor: two-stroke or four-stroke internal combustion engines, electric motors, etc.

In these vehicles, the motor - transmission set comprises a terminal part which supports also the driving wheel or wheels. The aforesaid terminal part is generally composed by some castings which, aside from serving to support the driving wheel or wheels, form a box for containing a gear reduction unit for transmitting motion from the propulsion engine to the driving wheel or wheels.

These motor - transmission sets are employed on various kinds of vehicles, which depending on the versions, can use wheels of different diameters and have different overall dimensions.

If a same motor - transmission set needs to be applied on multiple vehicle types, the problem therefore arises of maintaining constant the ground clearance of the motor - transmission set when wheels of different diameter are used.

Another problem which may arise is that of being able to insert wheels with different diameters in the motor - transmission set. For instance, using wheels with greater diameter, it is necessary to leave sufficient space between the wheel or wheels and the motor - transmission set, so that the wheel or wheels can be mounted correctly.

If, instead, wheels with smaller diameters are to be used, the need may arise to limit the overall dimensions of the motor - transmission set.

For these reasons, known motor - transmission sets provide for different configurations of the part supporting the wheel and of the related box for the containment of the gear reducing unit. The output shaft from the reducing unit supporting the driving wheel or wheels can therefore be in a higher or lower position relative to the ground or rolling plane of the vehicle. Moreover, the output shaft from the reducing unit can be at a greater or lesser distance relative to the propulsion motor which, generally, is found in a forward or rearward position relative to the driving wheel or wheels.

To obtain these different configurations it is necessary to provide different versions of the part supporting the driving wheel or wheels. Generally, also different versions of the gear reducing units which is in proximity to the wheel must be provided, i.e. different dispositions and dimensions of the gears.

Transmissions currently used by these vehicles provide a fixed distance between the centres of the drive shaft and of the driving wheel. To vary this distance, for instance to mount a larger wheel or to shorten the wheel base of the vehicle, the castings of the load bearing structures and of the related transmission covers must be varied. This implies large investments both for the castings and related tooling, and for the mechanical work processes.

In the best case, multiple distances can be obtained on the same castings, but acting in a specific manner on the mechanical work processes of the load bearing structure and on the mechanical work processes of the cover closing the reducing unit.

Specific elements are thus obtained for each distance without thereby reducing the problems connected with the positioning of the vehicle relative to the ground, since as wheel diameter changes, so does the ground clearance of the motor-transmission set.

Moreover, it may be necessary to build different gears of the reducing units for the various versions of the box.

Hence, construction costs are considerable, due to the different castings and to the different gears to be constructed. It should indeed be noted that the boxes of these reducing units are generally manufactured by pressure die-casting and the dies for this process have very high costs. The numerous pieces to be stored, which compose the box of the reducing unit and the reducing unit itself also determine a considerable amount of inventory to be warehoused, with the related costs.

A gear transmission for the final drive of a heavy automotive vehicle is disclosed in US-4 448 092 A. The gear transmission comprises two planar gear sets each having at least one gear rotatably supported on a respective housing part. The two housing parts are rotatable relatively about the axis of a coupling shaft to vary the interaxial spacing of input and output shafts connected to the respective sets and offset from the coupling shaft.

In EP-0 926 399 A is disclosed an adaptable transmission housing for motor vehicle according to the preamble of claim 1, which permits two position of the wheel axis in order obtain two different wheel bases of the vehicle. The design of this transmission housing does not deal with the problem of clearance height and therefore wheels with different diameters cause a variation in the ground clearance of the vehicle.

The aim of the present invention is to obtain a box for the support and transmission of the driving wheel or wheels of vehicles which, in a single constructive version, allows the use of wheels with different diameters while simultaneously maintaining a substantially constant ground clearance of the motor - transmission set.

In this way, it is possible to reduce the number of pieces to be built and warehoused, since having unified all, from the castings of the various components, to the mechanical work processes on these components, the same pieces suitable for multiple wheel axes are thus obtained, achieving obvious savings on the investments related to the castings, the work processes, their management and inventory load, as well as obtaining a great flexibility with a view on time to market.

According to an aspect of the present invention, a box for transmission and support of the driving wheel or wheels of vehicles as specified in the independent claim is presented. The dependent claims refer to preferred and advantageous embodiments of the invention.

Embodiments of the present invention, purely by way of non limiting example, are described hereafter with the aid of the accompanying drawings, in which:
- Figure 1 shows a side view of the motor-transmission set with the transmission and support box of the present invention and with two wheels having different diameter,
- Figure 2 shows a partial front section of the transmission box of Fig. 1, with the gears adapted for wheels of greater diameter and with a longer distance between the centre of the motor shaft and the wheel axle;
- Figure 3 shows a partial cross section of the transmission box of Fig. 1, with the gears adapted for wheels with lesser diameter and with a shorter distance between the centre of the motor shaft and the wheel axle;
- Figure 4 shows a cross section top view of the transmission box according to the IV-IV section line of Figure 2;
- Figure 5 shows a cross section of the box according to the V-V section line of Figure 3, in which two possible installations of the axle wheel gear are shown.

In accordance with the figures of the accompanying drawings, a motor - transmission set for vehicles is indicated in its entirety with the reference number 1.

The motor - transmission set 1 comprises a support element 2 of elongated shape which presents a first extremity 2a, connected to a motor 3, and a second extremity 7 wherein a box 8 for containing a transmission and for supporting one or more driving wheels 5, 6 is housed, to provide for the propulsion of a vehicle (not shown), with two or three or four wheels, on a rolling plane or ground 4.

According to a known configuration the box 8 contains a gear reducing unit 8a formed by three shafts. The reducing unit according to this configuration provides a first input shaft, a second intermediate shaft, so-called idle shaft, and a third output shaft, effecting two successive reductions in the speed of rotation of the shafts.

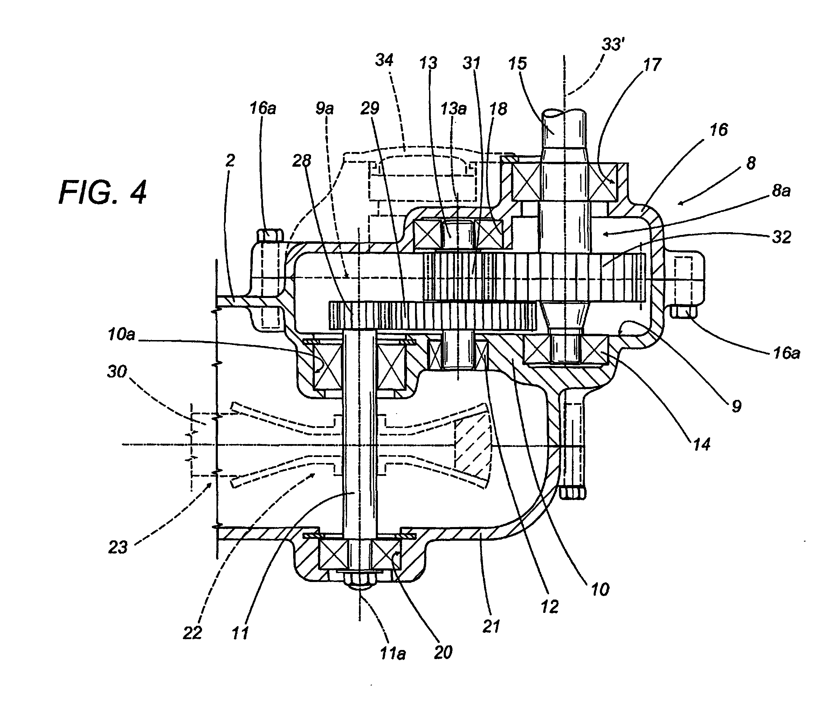

The box 8 (Fig. 4) comprises a structure 9 in the form of a container which presents an open side 9a and a lateral wall 10, wherein a first hole 10a to provide a passage and first support for a first propulsion shaft 11, a second support 12 for a second intermediate transmission shaft 13 and a third support 14 for a third support and transmission shaft 15 for one or more driving wheels 5, 6.

The open side 9a of the structure 9 is closed by a cover 16 fastened to the structure 9 itself by means of screws 16a. The cover 16 presents a second hole 17 to provide a passage and support for the third support and transmission shaft 15 of the driving wheel or wheels, and a fourth support 18 for the intermediate shaft 13.

As shown in Figure 4, the propulsion shaft 11 is supported also by a fifth support 20 obtained in a case 21 fastened to the structure 9 at the side opposite to the cover 16. On the shaft 11, elements 22 (Figure 4) of considerable mass are generally found, so that it is convenient to have the supports of the shaft 11 near these elements 22.

According to known constructive practices, all the shafts of the reducing gear are appropriately supported by bearings, preferably of the rolling type. The box 8 is conveniently provided with sealing gaskets; suitable gaskets are also provided on the input and output shafts 11, 15 of the box 8, in order to contain and maintain lubricating oil for its gears in its interior. The box 8 comprises an oil vapour breather loop 24, an oil filling stopper 25 provided with a rod 26 for verifying the oil level and an oil discharge plug 27.

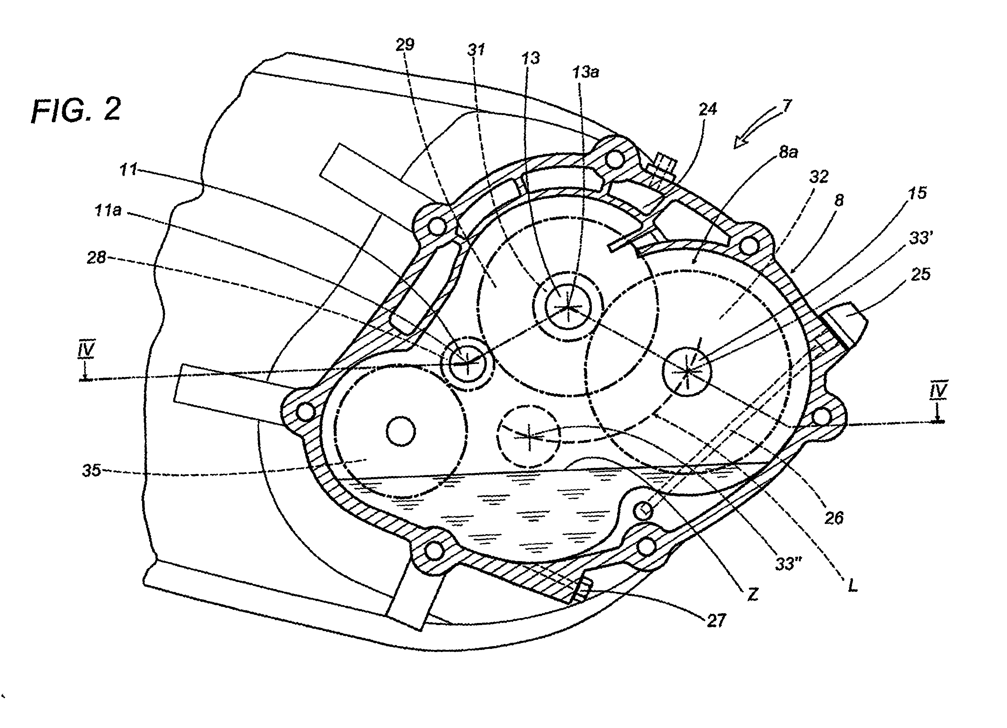

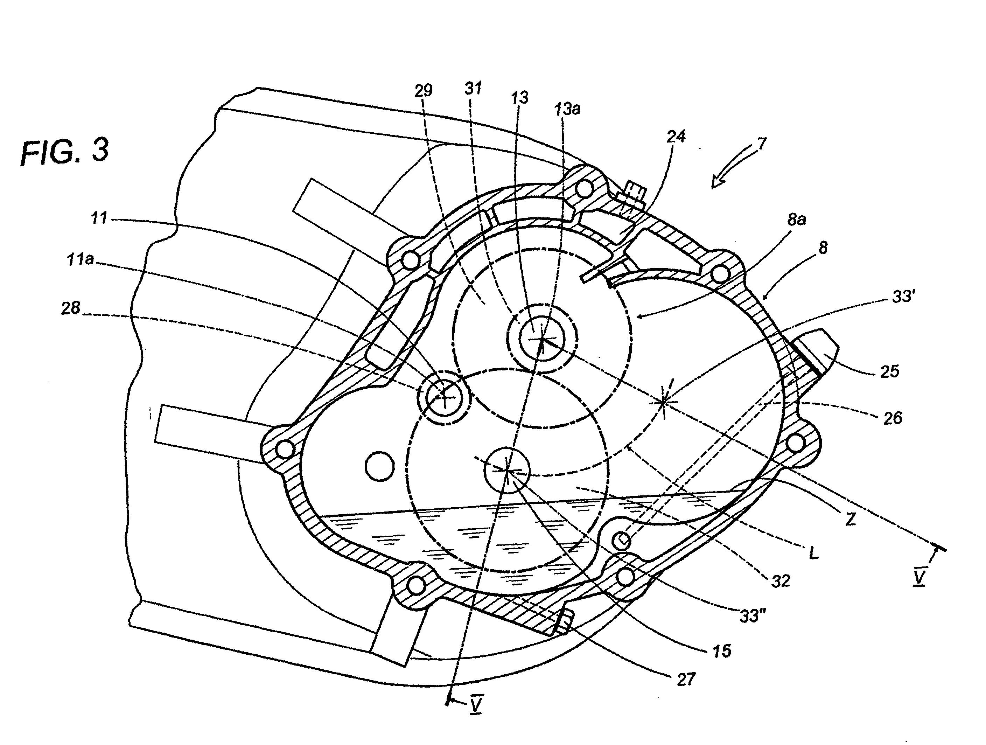

Figure 2 shows a configuration of the reducing unit 8a for driving wheels 5 with greater diameter, whilst Figure 3 shows a configuration of the reducer 8a for driving wheels 6 of lesser diameter.

The propulsion shaft 11 receives, in a known manner, motion from the motor 3 through a primary transmission 23. The shaft 11 rotates about a first axis 11a and bears a first gear wheel 28. The latter co-operates with a second gear wheel 29 with greater diameter which in turn is borne by the shaft 13 rotating about a second axis 13a. A first reduction of the motion is thereby determined.

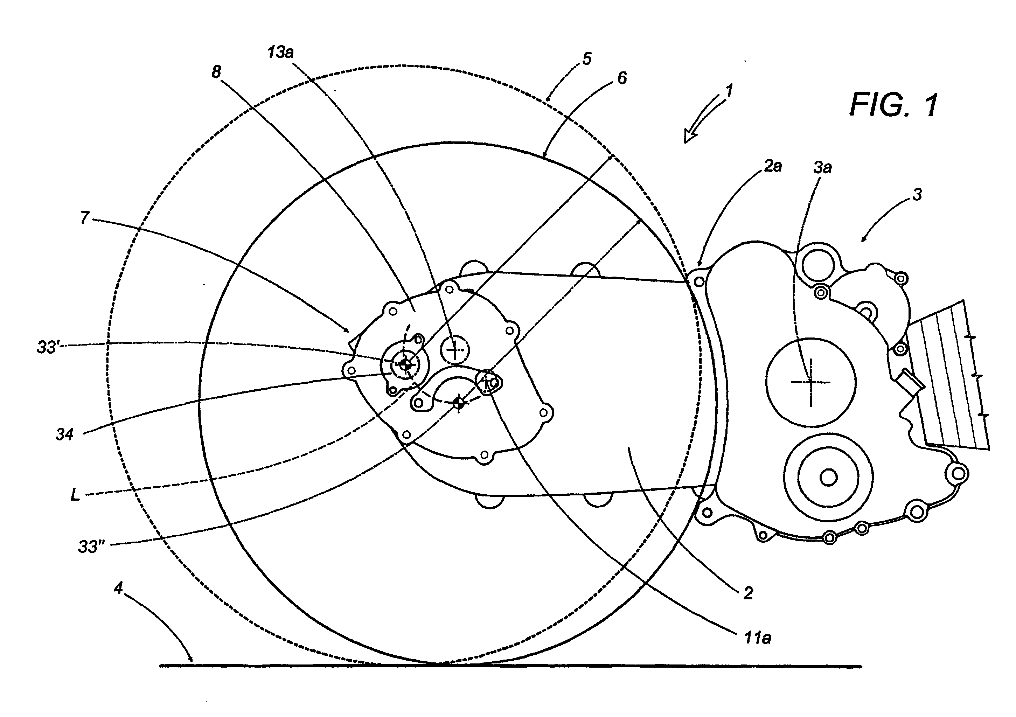

The second axis 13a is in a position that is offset laterally and superiorly relative to the first axis 11a of the shaft 11. In this way, the first axis 11a is more distant from the axis 3a (Fig. 1) of the motor 3 and its position is closer to the shaft 15 of the driving wheels than in known configurations. The primary transmission 23 generally uses a belt 30, which is longer for equal overall dimensions of the motor - transmission set. This is an advantage because the belt 30 can be cooled better and is less stressed, hence its durability and reliability are greater.

On the same shaft 13 is found a third gear wheel 31 with lesser diameter than the second gear wheel 29. The third gear wheel 31 co-operates with a fourth gear wheel 32 with greater diameter, thereby determining a second reduction of the motion. The gear wheel 32 is borne by the shaft 15 which rotates about a third axis 33', 33".

The shaft 15 and the related supports 14, 17 can assume a plurality of positions along a path indicated as L. Figures 2 and 3 show two extreme positions which can be assumed by the shaft 15 and by the gear wheel 32 of the wheel axis.

The path L is on a plane perpendicular to the ground or rolling plane 4 and is inclined relative to the latter plane 4 in order to compensate for the variations in diameter of the driving wheels 5, 6 and to maintain substantially constant the clearance from the plane 4 of the motor - transmission set 1 and thus of the vehicle itself.

Preferably, the path L is an arc of a circle, has its centre on the second axis 13a of the intermediate shaft 13, and has a radius equal to the operating distance between the centres of the pair of gear wheels 31, 32 of the intermediate shaft and of the shaft of the driving wheel or wheels.

As indicated above, Figure 2 shows a first position for the configuration with driving wheels 5 having greater diameter, to which configuration corresponds an axis of rotation 33' of the shaft 15. Figure 3 shows a second position for the configuration with driving wheels 6 having lesser diameter, to which configuration corresponds an axis of rotation 33" of the shaft 15.

The supports 14, 17 of the shaft 15 can be positioned in any point along the aforesaid path L and between the two extreme positions indicated with the axes 33' and 33". Therefore, a plurality of output positions of the shaft 15 are possible for the driving wheels 5, 6. In this way, with driving wheels 5 with greater diameter or driving wheels 6 with lesser diameter the distance from the rolling plane 4 of the motor - transmission set 1 remains substantially unchanged, with obvious advantages in terms of adaptability to different vehicles.

Furthermore, the axis 33" for the driving wheels 6 with lesser diameter is also closer to the motor 3. Vice versa, when driving wheels 5 with greater diameter are used the axis 33' is more distant from the motor 3.

This represents an additional advantage of the present invention because it allows to compact the overall size of the motor - transmission set with the related driving wheel or driving wheels and also allows to maintain a sufficient space between the motor - transmission set and the driving wheel or wheels, when wheels having different diameters are used.

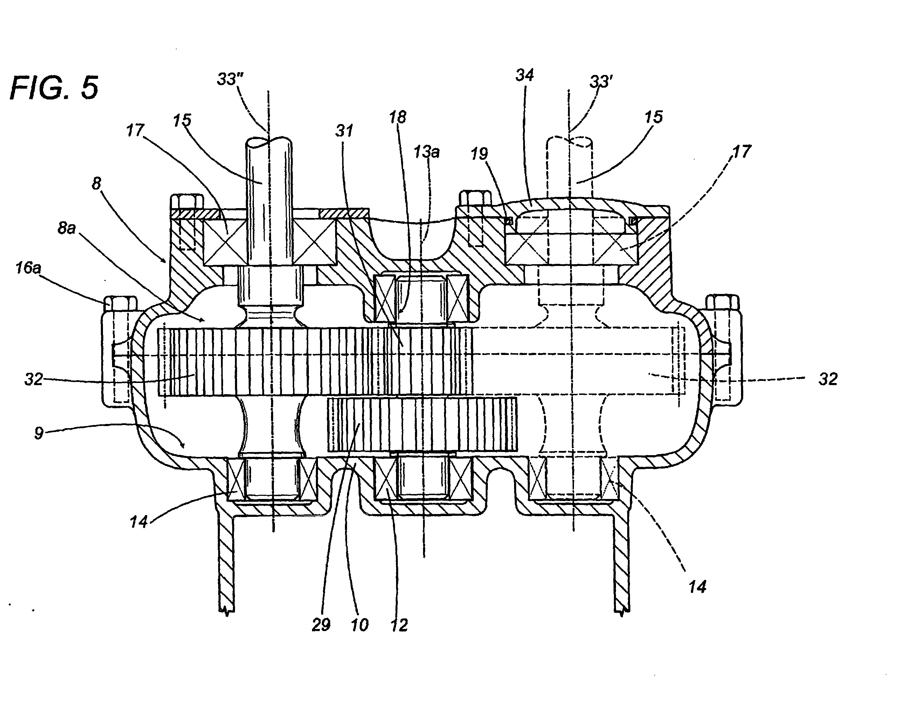

According to an additional embodiment, the shaft 15 can be moved in two positions, corresponding to the positions shown in Figures 2 and 3, and the structure 9 already comprises two supports 14 in the appropriate positions, which supports are used alternatively to the shaft 15. The cover 16 also comprises two holes 17 for the passage and support of the shaft 15. The hole 17 which is not used can be shut by an appropriate cap 34 fitted with gaskets 19, as shown in Figure 5.

Figure 5 shows the section corresponding to the line V-V of Figure 3, and passing through the axis 33" of the gear wheel 32, the shaft 13, and the axis 33' corresponding to the other extreme position of the gear wheel 32 and with the unused hole 17 shut by the cap 34; with a dashed line, another possible installation of the wheel 32 corresponding to the configuration of Figure 2 is also shown.

Based on the dimensions of the shafts and of the castings, more than two holes 17 can be provided, for instance three holes, for more positions of the shaft 15 of the wheel axle. Unused holes 17 will be shut by related caps.

For production requirements, when large numbers of pieces need to be produced, one can provide for machining the cover 16 in two or more specific versions. The cover 16 can be machined acting only on a hole 17 of the wheel axle in the desired position. In this way, one can avoid machining the additional hole or holes 17, and the addition of the cap or caps for closing the holes.

As indicated above, the positions of the wheel axes 33' or 33" of the shaft 15 of the wheel are on the path L which is substantially an arc of a circle and thus the wheel axes 33' or 33" are at a constant distance from the axis 13a of the intermediate shaft.

According to a variation to the present invention, the distance of the two positions of the wheel axes 33' or 33" from the axis 13a of the intermediate shaft is not constant. More specifically, when the driving wheels 5 with greater diameter are used, which have a greater rolling circumference, it may be necessary to increase the transmission ratio of the reducing unit 8a.

In other words, to maintain the same vehicle speed, the wheels with greater diameter must rotate at a lesser angular velocity. This can be obtained with a gear wheel 32 having greater diameter and a corresponding higher number of teeth.

In order not to modify the other gears of the reducing unit, but only replacing the gear wheel 32 of the transmission shaft 15, the distance between the axis 13a and the axis 33' of the configuration with driving wheels 5 having greater diameter must exceed the distance between the axis 13a and the axis 33" of the configuration with driving wheels 6 having lesser diameter.

In order to favour gear lubrication, a further gear wheel 35 can be provided, which meshes with the gear wheel 28. The gear wheel 35 is in part below the level Z of the lubricating oil, so that its rotation creates a beating of the oil which improves the lubrication of all gear wheels. This provision can be especially necessary in the configuration shown in Figure 2 in which the gear wheels are almost completely above the level Z of the oil, and allows to limit the quantity of oil necessary for lubrication.

### Key

- 1: Motor-transmission Set
- 2: Support Element
- 2a: First Extremity of the Element 2
- 3: Motor
- 4: Vehicle Rolling Plane
- 5: Driving Wheel with Greater Diameter
- 6: Driving Wheel with Lesser Diameter
- 7: Second Extremity of the Element 2
- 8: Adjustable Gearbox
- 8a: Reducing Unit
- 9: Structure in the Form of a Container
- 9a: Open Side of the Structure 9
- 10: Lateral Wall of the Structure 9
- 10a: First Passage and Support Hole
- 11: Propulsion Shaft
- 11a: First Axis of Rotation of the Shaft 11
- 12: Second Support
- 13: Second Intermediate Shaft of the Reducing Unit 8a
- 13a: Second Axis of Rotation of the Shaft 13
- 14: Third Support
- 15: Third Support and Transmission Shaft
- 16: Cover
- 16a.: Screws of the Cover 16
- 17: Second Passage Holes
- 18: Fourth Support for the Shaft 13
- 19: Gaskets for Cap 34
- 20: Fifth Support for the Shaft 11
- 21: Case for Primary Transmission 23
- 22: Elements of the Primary Transmission
- 23: Primary Transmission
- 24: Oil Vapour Breather Loop
- 25: Oil Filling Stopper
- 26: Oil Level Rod
- 27: Oil Discharge Plug
- 28: First Gear Tooth
- 29: Second Gear Tooth
- 30: Primary Transmission Belt
- 31: Third Gear Wheel
- 32: Fourth Gear Wheel
- 33', 33": Axes of Shaft 15
- 34: Closure Cap for Hole 17
- 35: Lubricating Wheel
- L: Displacement Path of Shaft 15
- Z.: Lubricating Oil Level

## Claims

1. An adjustable gearbox (8) for vehicles with constant clearance from the ground (4), the vehicles being provided with at least a driving wheel (5;6) and including a motor-transmission set (1) with a support element (2), whose first extremity (2a) is connected to a propulsor motor (3) and to a second extremity (7) presents said gearbox (8), the box (8) comprising:
- a structure (9) in the form of a container with an open side (9a) and a lateral wall (10) opposite to the open side (9a), the wall (10) being provided with a first hole (10a) serving as a first support and at least a second support (12);
- a cover (16) provided with a second passage and support hole (17), the cover (16) being fastenable to the open side (9a) of the structure (9);
- a first propulsion shaft (11) passing through the first hole (10a) and supported therein;
- a second intermediate shaft (13) associated to the propulsion shaft (11) and supported by the second support (12), the second shaft (13) being supported by a fourth support (18) obtained in the cover (16), said second shaft (13) and the related supports (12, 18) fixed relative to the box (8);
- a third support and motion transmission shaft (15) for said at least one driving wheel (5, 6) associated to the intermediate shaft (13) and passing through the second hole (17) and supported therein, and supported in the third support (14) in the lateral wall (10);
- the second hole (17) of the closure cover (16) and the support and motion transmission shaft (15) for said at least one driving wheel (5;6) being positionable in a plurality of positions along a path (L) positioned on a perpendicular plane relative to the ground or rolling plane (4) of the vehicle,
**characterized in that**
the path is inclined relative to said plane (4), forming an arc of a circle concentric to the second shaft (13).

2. An adjustable gearbox according to claim 1 **characterised in that** the support and transmission shaft (15) rotates about an axis (33'; 33") and is supported by the third support (14) positioned in the wall (10) of the structure (9), the third support (14) and the second hole (17) being able to be positioned in a plurality of points between two extreme positions, in order to make the support and transmission shaft (15) movable between a first extreme position whereto corresponds a first axis of rotation (33') for driving wheels (5) with greater diameter and a second extreme position whereto corresponds a second axis of rotation (33") for driving wheels (6) of lesser diameter.

3. An adjustable gearbox as claimed in claim 2, **characterised in that** it comprises at least two third supports (14) and at least two second holes (17) positioned along the path (L), whereof at least a third support (14) and at least a second hole (17) are used by the support and transmission shaft (15) and the remaining second holes (17) are closed by respective sealing caps (34).

4. An adjustable gearbox as claimed in one of the previous claims, **characterised in that** the propulsion shaft (11) rotates about a first axis (11a) and is actuated by a primary transmission (23) comprising a belt (30), the axis (11a) being situated in a close position to the third axis (33', 33") of said at least one driving wheel (5; 6) and in a distant position from the axis (3a) of the motor (3), in order substantially to increase the length of the belt (30) for equal overall dimensions of the motor - transmission set (1).

5. An adjustable gearbox as claimed in one of the previous claims, **characterised in that** the first propulsion shaft (11) bears a first gear wheel (28) associated to a second gear wheel (29) with greater diameter borne by the second intermediate shaft (13), said shaft (13) further comprising a third coaxial gear wheel (31) having lesser diameter than the second gear wheel (29), the third gear wheel (31) being associated to a fourth gear wheel (32) having greater diameter, borne by the third shaft (15), thereby determining two successive motion reductions, and the gearbox further comprising, in its own interior, oil with a level (Z) and a wheel (35) associated with the propulsion shaft (11) positioned in part below the level (Z) to favour the beating of the oil and to increase the lubrication of the other gear wheels (28, 29, 31, 32) of the reducing unit (8a).

## Patentansprüche

1. Verstellbares Getriebe (8) für Kraftfahrzeuge mit konstanter Bodenfreiheit (4), wobei die Kraftfahrzeuge mit wenigstens einem Antriebsrad (5; 6) versehen sind und eine Antriebsübertragungsgruppe (1) mit einem Trägerelement (2) enthalten, dessen erstes Ende (2a) an einen Antriebsmotor (3) angeschlossen ist und ein zweites Ende (7) das genannte Getriebe (8) aufweist, wobei das Getriebe (8) wie folgt enthält:
- eine Struktur (9) in Form eines Behälters mit einer offenen Seite (9a) und einer der offenen Seite (9a) gegenüberliegenden Seitenwand (10), wobei die Wand (10) mit einer ersten Bohrung (10a) versehen ist, die als eine erste Halterung und wenigstens als eine zweite Halterung (12) dient;
- einen Deckel (16), versehen mit einer zweiten Durchlassund Haltebohrung (17), wobei der Deckel (16) an der offenen Seite (9a) der Struktur (9) zu befestigen ist;
- eine erste Antriebswelle (11), die durch die erste Bohrung (10a) verläuft und in dieser getragen wird;
- eine zweite Zwischenwelle (13), zugeordnet der Antriebswelle (11) und getragen durch die zweite Halterung (12), wobei die zweite Welle (13) von einer vierten, in den Deckel (16) eingearbeiteten Halterung (18) getragen wird, und wobei die genannte zweite Welle (13) und die entsprechenden Halterungen (12, 18) im Verhältnis zu dem Getriebe (8) feststehend sind;
- eine dritte Trag- und Übertragungswelle (15) für das wenigstens eine genannte Antriebsrad (5, 6), zugeordnet der Zwischenwelle (13) und durch die zweite Bohrung (17) verlaufend und in dieser getragen, sowie getragen in der dritten Halterung (14) in der Seitenwand (10);
- wobei die zweite Bohrung (17) des Verschlussdeckels (16) und die Trag- und Übertragungswelle (15) für das genannte wenigstens eine Antriebsrad (5, 6) in einer Vielzahl von Positionen entlang einer Bahn (L) angeordnet werden können, die auf einer lotrechten Ebene im Verhältnis zu dem Boden oder der Laufebene (4) des Fahrzeugs verläuft,
**dadurch gekennzeichnet, dass** die Bahn im Verhältnis zu der genannten Ebene (4) geneigt ist, wobei sie einen konzentrisch zu der zweiten Welle (13) verlaufenden Kreisbogen bildet.

2. Verstellbares Getriebe nach Patentanspruch 1, **dadurch gekennzeichnet, dass** sich die Trag- und Übertragungswelle (15) um eine Achse (33'; 33") dreht und von der dritten, in der Wand (10) der Struktur (9) angeordneten Halterung (14) getragen wird, wobei die dritte Halterung (14) und die zweite Bohrung (17) geeignet sind, an einer Vielzahl von Punkten zwischen den extremen Positionen angeordnet zu werden, um die Halterung und die Übertragungswelle (15) zwischen einer ersten extremen Position, welcher eine erste Drehachse (33') für die Antriebsräder (5) mit einem grösseren Durchmesser entspricht, und einer zweiten extremen Position, welcher eine zweite Drehachse (33") für die Antriebsräder (6) mit einem kleineren Durchmesser entspricht, beweglich zu machen.

3. Verstellbares Getriebe nach Patentanspruch 2, **dadurch gekennzeichnet, dass** es wenigstens zwei dritte Halterungen (14) und zwei zweite Bohrungen (17) enthält, angeordnet entlang der Bahn (L), von denen wenigstens eine dritte Halterung (14) und wenigstens eine zweite Bohrung (17) von der Trag- und Übertragungswelle (15) benutzt werden und die verbleibenden zweiten Bohrungen (17) durch jeweilige Verschlusskappen (34) verschlossen bleiben.

4. Verstellbares Getriebe nach einem beliebigen der vorstehenden Patentansprüche, **dadurch gekennzeichnet, dass** die Antriebswelle (11) sich um eine erste Achse (11a) dreht und durch eine primäre Übertragung (23) betätigt wird, enthaltend einen Riemen (30), wobei die Achse (11a) in einer Position dicht an der dritten Achse (33', 33") des genannten wenigstens einen Antriebsrades (5; 6) und in einer von der Achse (3a) des Motors (3) abstehenden Position angeordnet ist, um im wesentlichen die Länge des Riemens (30) zu vergrössern, entsprechend den Gesamtabmessungen der Antriebsübertragungsgruppe (1).

5. Verstellbares Getriebe nach einem beliebigen der vorstehenden Patentansprüche, **dadurch gekennzeichnet, dass** die erste Antriebswelle (11) ein erstes Zahnrad (28) trägt, zugeordnet einem zweiten Zahnrad (29) mit einem grösseren Durchmesser, das von der zweiten Zwischenwelle (13) getragen ist, wobei die genannte Welle (13) weiterhin ein drittes koaxiales Zahnrad (31) enthält, das einen geringeren Durchmesser hat als der des zweiten Zahnrades (29), wobei das dritte Zahnrad (31) einem vierten Zahnrad (32) mit einem grösseren Durchmesser zugeordnet ist, getragen von der dritten Welle (15), wodurch zwei aufeinanderfolgende Antriebsreduzierungen bestimmt werden, und wobei das Getriebe in seinem Inneren weiter Öl mit einem Füllstand (Z) enthält und ein der Antriebswelle (11) zugeordnetes Rad (35), angeordnet teilweise unterhalb des Füllstandes (Z), um das Aufschlagen des Öls zu begünstigen und somit die Schmierung der anderen Zahnräder (28, 29, 31, 32) der Untersetzungseinheit (8a) zu verstärken.

## Revendications

1. Une boîte de vitesses (8) adaptable pour véhicules avec garde au sol (4) constante, les véhicules étant équipés d'au moins une roue motrice (5; 6) et comprenant un groupe moteur - transmission (1) avec un élément de support (2) dont une première extrémité (2a) est reliée à un moteur de propulsion (3) et une deuxième extrémité (7) présente ladite boîte de vitesses (8), telle boîte (8) comprenant :
- une structure (9) en forme de récipient avec un côté ouvert (9a) et une paroi latérale (10) opposée à ce même côté ouvert (9a), la paroi (10) étant pourvue d'un premier trou (10a) servant de premier support et d'au moins un deuxième support (12) ;
- un couvercle (16) pourvu d'un deuxième trou de passage et de support (17), le couvercle (16) pouvant être fixé sur le côté ouvert (9a) de la structure (9) ;
- un premier arbre de propulsion (11) passant à travers le premier trou (10a) et supporté dans ce dernier ;
- un deuxième arbre intermédiaire (13) associé à l'arbre de propulsion (11) et supporté par le deuxième support (12), le deuxième arbre (13) étant supporté par un quatrième support (18) réalisé dans le couvercle (16), ledit deuxième arbre (13) et lesdits supports (12, 18) correspondants étant fixes par rapport à la boîte (8) ;
- un troisième arbre de support et de transmission du mouvement (15) pour au moins ladite roue motrice (5; 6), associé à l'arbre intermédiaire (13), passant à travers le deuxième trou (17) et supporté dans ce dernier, et supporté aussi dans un troisième support (14) réalisé dans la paroi latérale (10) ;
- le deuxième trou (17) du couvercle de fermeture (16) et l'arbre de support et de transmission du mouvement (15) pour au moins ladite roue motrice (5; 6) pouvant être positionnés dans une pluralité de positions le long d'un parcours (L) se trouvant sur un plan perpendiculaire par rapport au sol ou plan de roulement (4) du véhicule, ladite boîte de vitesses adaptable étant **caractérisée en ce que** ledit parcours est incliné par rapport au plan (4) en question, formant un arc de cercle concentrique au deuxième arbre (13).

2. La boîte de vitesses adaptable selon la revendication 1, **caractérisée en ce que** ledit arbre de support et de transmission (15) tourne autour d'un axe (33'; 33") et est supporté par le troisième support (14) situé dans la paroi (10) de la structure (9), ledit troisième support (14) et ledit deuxième trou (17) pouvant être positionnés en une pluralité de points entre deux positions extrêmes, de manière à ce que l'arbre de support et de transmission (15) puisse être déplacé entre une première position extrême à laquelle correspond un premier axe de rotation (33') pour roues motrices (5) de grand diamètre, et une deuxième position extrême à laquelle correspond un deuxième axe de rotation (33") pour roues motrices (6) de petit diamètre.

3. La boîte de vitesses adaptable selon la revendication 2, **caractérisée en ce qu'**elle comprend au moins deux troisièmes supports (14) et au moins deux deuxièmes trous (17) positionnés le long du parcours (L), dont au moins un troisième support (14) et au moins un deuxième trou (17) sont utilisés par l'arbre de support et de transmission (15) et les deuxièmes trous (17) restants sont fermés par des bouchons (34) hermétiques.

4. La boîte de vitesses adaptable selon une des revendications précédentes, **caractérisée en. ce que** ledit arbre de propulsion (11) tourne autour d'un premier axe (11a) et est actionné par une transmission primaire (23) comprenant une courroie (30), l'axe (11a) étant situé dans une position proche du troisième axe (33', 33") de ladite au moins roue motrice (5; 6) et dans une position éloignée de l'axe (3a) du moteur (3), afin d'augmenter en substance la longueur de la courroie (30) à parité de dimensions globales du groupe moteur - transmission (1).

5. La boîte de vitesses adaptable selon une des revendications précédentes, **caractérisée en ce que** ledit premier arbre de propulsion (11) porte une première roue dentée (28) associée à une deuxième roue dentée (29) de plus grand diamètre portée par le deuxième arbre intermédiaire (13), ledit arbre (13) comprenant également une troisième roue dentée (31) coaxiale de plus petit diamètre que la deuxième roue dentée (29), ladite troisième roue dentée (31) étant associée à une quatrième roue dentée (32) de plus grand diamètre portée par le troisième arbre (15), ce qui détermine ainsi deux réductions de mouvement successives, ladite boîte de vitesses comprenant aussi, à l'intérieur, de l'huile avec un niveau (Z) et une roue (35) associée à l'arbre de propulsion (11) et située en partie sous le niveau (Z) pour favoriser le battement de l'huile et augmenter la lubrification des autres roues dentées (28, 29, 31, 32) du réducteur (8a).
